# EUROPEAN PATENT SPECIFICATION

(11) **EP 4 678 360 B1**
(45) Date of publication and mention of the grant of the patent: **02.09.2026**
(21) Application number: 25168964.2
(22) Date of filing: 07.04.2025
(51) Int. Cl.: B27B 25/02, B23D 59/00, B27B 25/00, B27C 5/06, B27D 3/04, B27M 1/08

(54) **DEVICE FOR MOUNTING FEEDERS OF WOODWORKING MACHINES AND FEEDER PROVIDED WITH SUCH A DEVICE**
VORRICHTUNG ZUR MONTAGE VON VORSCHUBGERÄTEN FÜR HOLZBEARBEITUNGSMASCHINEN UND VORSCHUBGERÄT MIT EINER SOLCHEN VORRICHTUNG
DISPOSITIF DE MONTAGE D'ALIMENTATEURS DE MACHINES À BOIS ET ALIMENTATEUR MUNI D'UN TEL DISPOSITIF

(30) Priority: 11.07.2024 IT 202400016015
(43) Date of publication of application: 14.01.2026
(73) Proprietor: Maggi Technology S.r.l., 50052 Certaldo (FI) (IT)
(72) Inventor: Presenti, Marco, 50136 Firenze (IT)
(74) Representative: Mincone, Antimo

(56) References cited:
- CH-A- 398 049

## Description

The present invention relates to a device for mounting feeders for woodworking machines and a feeder provided with such a device.

More particularly, a device in accordance with the present invention can be used for mounting feeders with which machines, such as circular saws, squaring machines, spindle moulders or milling machines, intended for machining unfinished or semi-finished pieces of wood, such as boards, panels or beams, can generally be equipped.

It is well known that a drive for so-called "woodworking machines", i.e. machine tools configured to perform mechanical machining on unfinished or semi-finished wood pieces, generally serves to drive a workpiece along a horizontal sliding plane with which the machine tool is equipped. In general, such a drive comprises a plurality of rubberised rollers, or a rubberised track, protruding inferiorly from the outline of a casing on which an electric motor is mounted that controls the rotation of the rollers or the rubberised track by means of a special transmission. Generally, the feeder is mounted on a support, commonly known as a "stand", which supports its weight and allows the position of the feeder to be adjusted in relation to the sliding plane of the parts on the machine tool. The feeding itself is caused by the contact of the rollers or track on the workpiece. Generally, the feeder is mounted on the stand by means of a connecting coupling, which allows the feeder to be adjusted in relation to the said sliding plane in such a way that the feeder can be oriented both horizontally and vertically.

In a feeder of the known type, distributed under the trade name Comatic Power Feeder, the aforementioned connection coupling is integrated in the drive casing of the feeder, so that its use on feeders whose casing is not designed to receive it is impossible.

CH398049 describes a roller feeder for woodworking machines.

The main aim of the present invention is to propose an assembly system that allows the use of a coupling for connecting the feeder to the stand, which enables the alignment of the feeder to the machine tool to be varied easily and safely, even on drives that are not originally designed to receive such a coupling.

This result has been reached, in accordance with the present invention, by adopting the idea of realising a connection device having the features indicated in claim 1. Other features of the present invention are the subject of dependent claims.

Thanks to the present invention, it is possible to increase the flexibility and operational safety of drive units for woodworking machines without the need to replace existing feeders, which implies benefits both in economic terms for the user, who will be able to continue using the feeders in his possession, and consequently in environmental terms. Furthermore, a connecting device in accordance with the present invention is particularly economical in relation to the benefits it offers.

These and further advantages and features of the present invention will be more and better understood by any technician in the branch thanks to the following description and the annexed drawings, provided as an example but not to be considered in a limiting sense, in which
- Figs.1-2 are two perspective views of a feeder mounted on a stand by means of a mounting system in accordance with the present invention in an first operational arrangement;
- Figs. 3-4 are two perspective views of a feeder mounted on a stand by means of a connecting device in accordance with the present invention in a second operating arrangement;
- Figs. 5-6 are two side views of a mounting device in accordance with the present invention;
- Fig.7 is a sectional view in accordance with line A-A of Fig.5;
- Figs.8-10 are three perspective views of the device of Fig.5 and Fig.6;
- Fig.11 is an exploded perspective view of the device of Fig.5 and Fig.6;
- Fig.12 is similar to Fig.6 but also includes a representation of the components marked by the references 5B and 5P;
- Fig.13 is an illustrative diagram showing a feeder acting on a workpiece;
- Fig.14 represents a further configuration of the device shown in Figs.5-12;
- Fig.15 represents yet another configuration of the device shown in the previous figures;
- Figs.16-19 represent further possible configurations of a mounting device in accordance with the present invention;
- Fig.20 is a sectional view according to the B-B line of Fig.16;
- Figs.21A, 22A and 23A represent various reciprocal axial positions of the base and upper body of connector 3;
- Figs.21B and 21C represent a sectional view according to line C-C and a sectional view according to line D-D of Fig.21A;
- Figs.22B and 22C represent a sectional view according to the line E-E and a sectional view according to the line F-F of Fig.22A;
- Figs.23B and 23C represent a sectional view according to line G-G and a sectional view according to line H-H of Fig.23A;

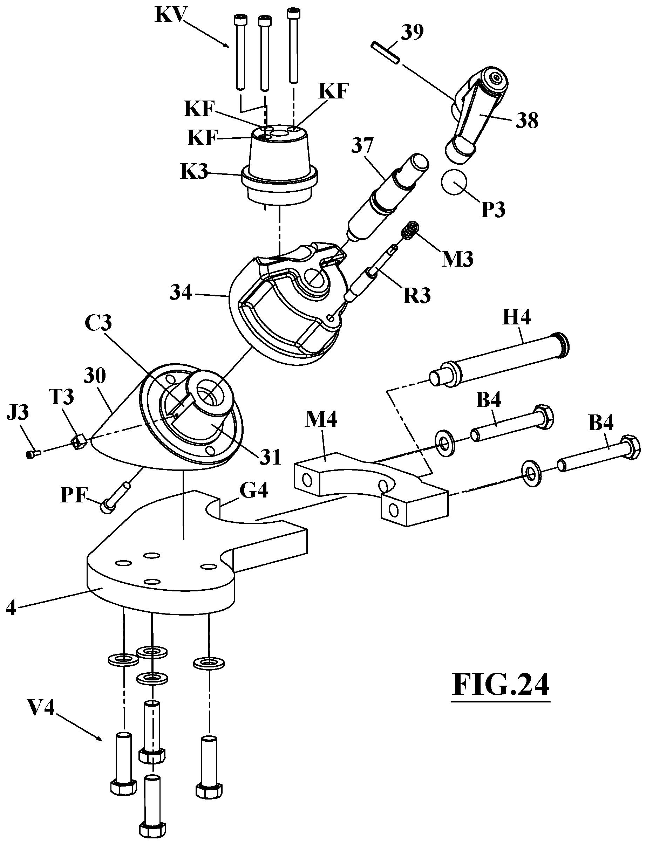

- Fig.24 is an exploded view of the device shown in Figs.16-23C;

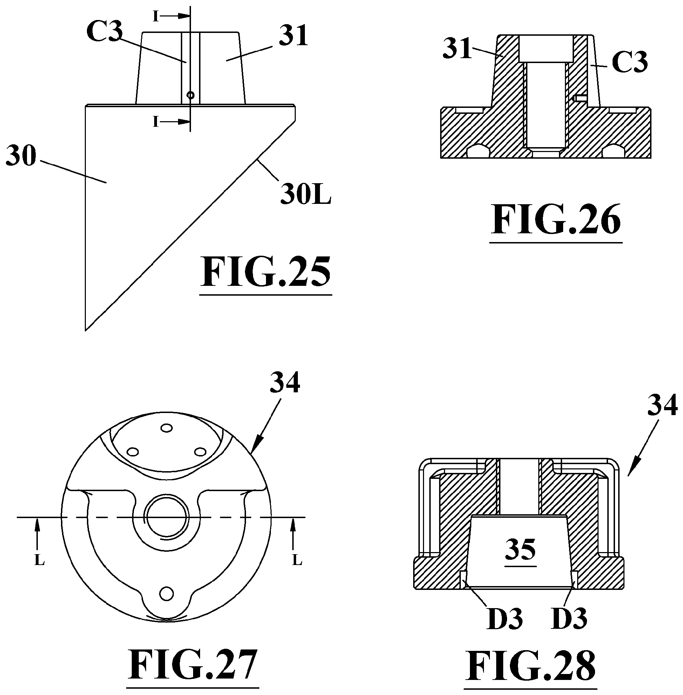

- Fig.25 is a side view of the base of connector 3 of the device shown in Figs.16-23C;
- Fig.26 is a sectional view according to the I-I line of Fig.25;
- Fig.27 is a plan view from above of the upper body of connector 3 of the device illustrated in Figs.16-23C;
- Fig.28 is a sectional view according to the L-L line of Fig.27.

The following description provides possible examples of the realisation of a connection system in accordance with the present invention.

In the attached sample drawings, the feeder is marked by reference '1', while reference '2' indicates a stand on which the feeder is mounted, the rollers of the feeder are indicated by reference 'R1', the drive motor of said rollers is indicated by reference 'M1', and the feeder casing is indicated by reference 'C1'. Furthermore, references '2C' and '2B' respectively indicate a column and an arm of the stand, references 'VC' and 'VB' respectively indicate a handwheel for adjusting the position of the arm 2B along the height of the column 2C and a handwheel for adjusting the overhang of the arm 2B, reference '2L' indicates the lower base of the column 2C and reference '2T' indicates a right angle joint connecting the arm 2B with the column 2C.

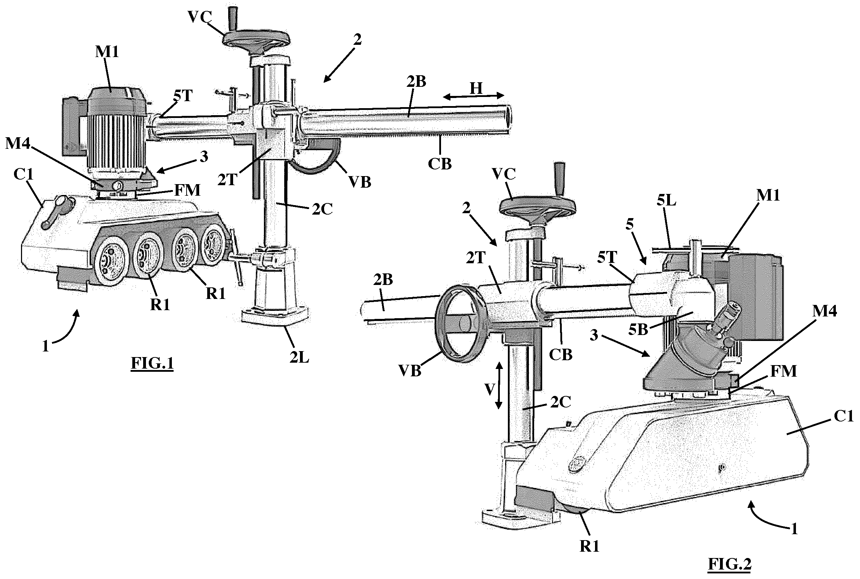

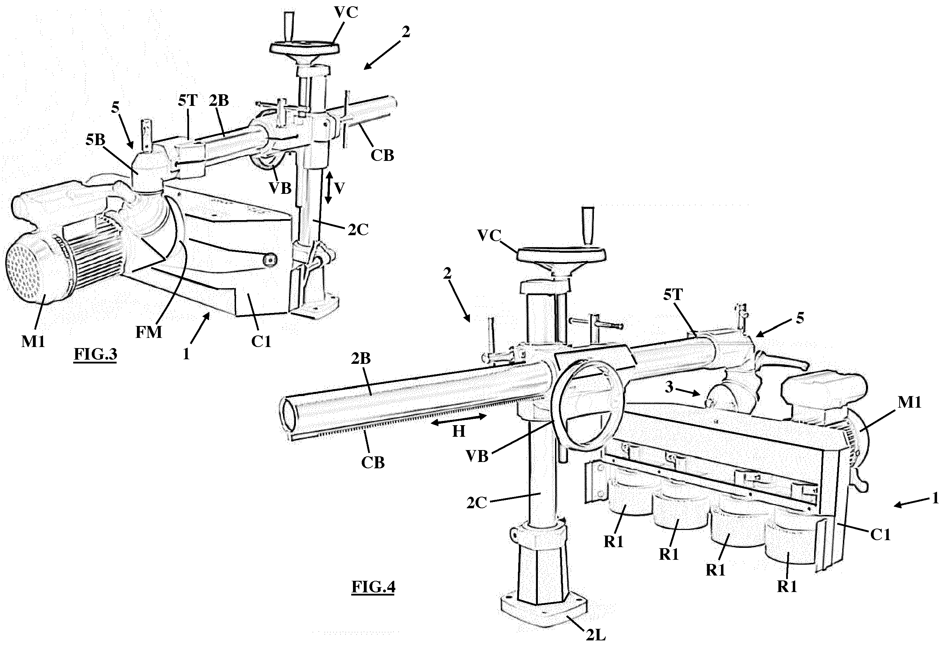

According to an inherently known configuration, the stand 2 shown in the accompanying exemplary drawings is of the type comprising a column 2C on which an arm 2B is cantilevered. The connection between the column 2C and the arm 2B is realised by means of an orthogonal joint 2T with a first seat passing through the column 2C and a second seat passing through, orthogonal to the first, for the arm 2B. An interface element 5 is mounted on one end of the arm 2B by means of which, as further described below, a feeder 1 can be connected to the stand 2. By means of a first handwheel VC acting on the joint 2T, the position of the arm 2B along the column 2C, i.e. the height of the arm 2B with respect to the lower base 2L of the same column, is manually controlled. A second handwheel VB, constrained to joint 2T and acting on a rack CB formed on the lower side of arm 2B, allows the longitudinal position of arm 2B to be adjusted. The 'V' and 'H' arrows in Figs. 1-4 represent the vertical and horizontal position adjustments of arm 2B.

The stand 2 is, in other words, a device configured to allow the position of the feeder 1 to be adjusted both vertically, as indicated by the V arrows, and horizontally, as indicated by the H arrows, and to support the feeder itself.

Also shown in the drawings is a connector 3 for connecting the feeder 1 to the stand 2, configured to allow the orientation of the feeder 1 with respect to the stand 2 to be changed manually.

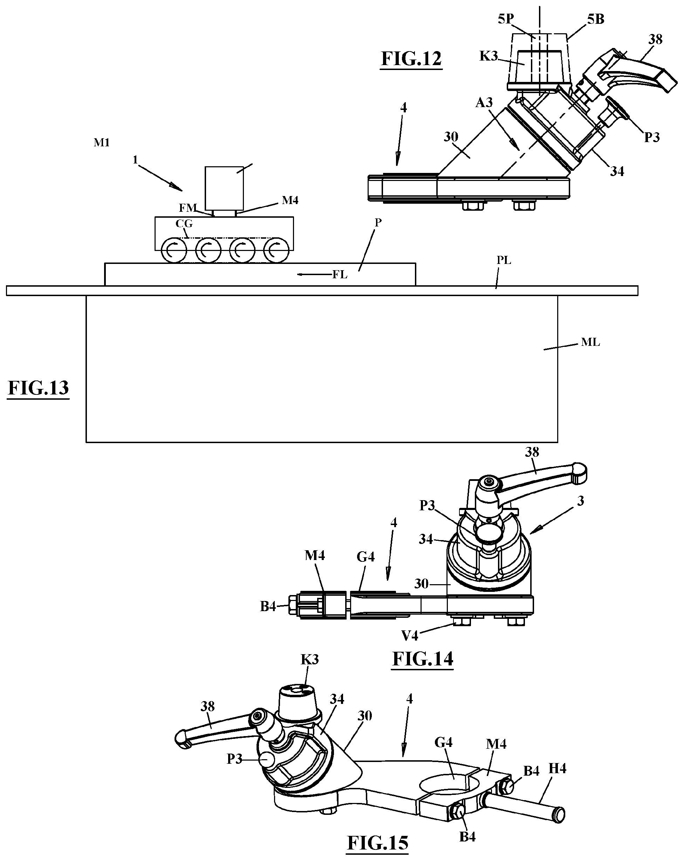

The feeder 1 depicted in the accompanying exemplary drawings is of the type, known in itself, comprising a plurality of parallel-axis rubberised rollers R1 housed in a structure externally delimited by a casing C1 and enslaved to an electric motor M1 by means of a transmission (not visible in the accompanying drawings) covered by the casing C1. The rollers R1 rotate in accordance with the direction set by motor M1. Motor 1 is bound to the housing C1 by means of a collar flange FM through which the relevant shaft passes. The operation of the feeder 1 is known to the technicians of the field and will therefore not be described in more detail. In some designs, the feeder 1 may have a rubberised track CG, represented by dotted lines in the diagram in Fig.13, instead of rollers R1. The contact of the rollers R1 with workpiece P determines the translation of the same workpiece P on the plane PL of the ML machine as schematically represented in Fig. 12 where the arrow FL indicates precisely the movement of workpiece P on the plane PL. The ML machine, according to a known configuration, is equipped with tools (not visible in the attached drawings) to cut or mill workpiece P.

Reduced to its essential structure and with reference to the accompanying illustrative drawings, the aforementioned connector 3 is a rotating joint that can be connected to the feeder 1 by means of a connection arm 4 which, on one side, is fixed precisely to the connector 3 and, on the other side, is removably fixed to the feeder 1.

In practice, the connector arm 4 is positioned between the connector 3 and the feeder 1, while the connector 3 is positioned between the stand 2 and the connector arm 4.

With reference to the example embodiment shown in the accompanying drawings, the connector 3 comprises a base element 30 on the upper side of which a conical body 31 and, peripherally with respect to the lower base of the conical body 31, several holes 32 (in the example shown in the drawing, the holes 32 are two in number but they may be of a different number, for example three or four in number) are formed at angularly equidistant positions. Preferably, the conical body 31 is provided with an axial threaded hole 33 whose function is described further below. The connector 3 further comprises an upper element 34 having an internal tapered seat 35 in which the tapered body 31 of the base element 30 is seated. Therefore, the upper element 34 can rotate, around the axis A3 of the conical coupling 31/35, with respect to the base 30 which, as further described below, is connected to the connector arm 4. The tapered seat 35 of the upper member 34 has an axial threaded hole 36 in which a threaded pin 37 is inserted which engages both the same threaded hole 36 and the axial threaded hole 33 of the tapered body 31. The threaded pin 37 has opposing threads on its upper and lower sides. The axes of the threaded holes 33 and 36 are arranged along the axis A3 of the tapered coupling 31/35 in the mounting arrangement of the connector 3. By screwing or unscrewing the pin 37, the mutual engagement of the base member 30 and the upper member 34 of the connector 3 is determined. Preferably, a lever 38 is mounted on one end of the pin 37 protruding beyond the upper member 34 to facilitate manual rotation of the same pin. For example, the lever 38 may be mounted on the upper end of the pin 37 by means of a pin 39 passing through transverse holes V, W formed on the pin 37 and on a front appendage of the lever 38. The axis A3 of the conical coupling 31/35 is inclined at a predetermined angle with respect to the connecting arm 4. For example, by realising the arm 4 in the form of a plate as depicted in the accompanying drawings, the base 30 of the connector 3 has a correspondingly inclined side 30L.

In a possible alternative embodiment of the present invention, the aforementioned conical appendage K3 could be realised as a single body with the upper element 34 of the connector 3 and/or the base 30 of the connector 3 could be realised as a single body with the connection arm 4.

The upper element 34 of the connector 3 is also provided with a seat S3 for a rod R3 having a lower end intended to selectively engage, one at a time, the holes 32 of the base element 30. Said seat S3 is also provided for housing a spring M3 invested on a thinner upper part of the rod R3. The spring M3 is intended to keep the rod R3 pushed towards the hole 32 engaged by it. On an upper end of the rod R3 protruding above the upper element 34 of the connector 3 is arranged a knob P3 useful for pulling the rod R3, overcoming the resistance offered by the spring M3, when it is desired to disengage the rod R3 from the hole 32 engaged by the same rod R3. On said upper element 34 is also formed a conical appendix K3 whose axis AK is inclined by a predetermined value with respect to the axis A3 of the conical connection 31/35, i.e. with respect to the axis of the conical body 31 and of the conical seat 35. The tapered appendage K3 has an axial threaded hole Z3 oriented along the axis AK.

Said tapered appendage K3 is used to connect the connector 3 with an interface element 5 mounted on the stand 2. Said interface element 5 comprises a front bushing 5B with a conical internal seat, suitable for receiving the conical appendage K3, provided with an axial thread to allow the connection of the connector 3 to the same bushing by means of a respective threaded pin 5P. The interface element also includes a tergal portion 5T fixed to the stand 2. In the attached exemplary drawings, the tergal portion 5T of the interface element 5 is fixed to one end of the arm 2B. Screwing or unscrewing the pin 5P clamps the connector 3 to the stand 2 and, conversely, unclamps the connector 3 from the stand 2. Preferably, a lever 5L is provided on the pin 5P to facilitate its manual rotation by the operator using the feeder 1.

The connection arm 4 serves, as mentioned above, to connect the connector 3 to the feeder 1. For this purpose, the connection arm 4 has a rear side configured to be connected to the connector 3 and a front side configured to be connected to the feeder 1. For example, the rear side of the connection arm 4 has a plurality of through holes F4 through which screw means V4 pass intended to connect said rear side with a lower face 30L of the base element 30 of the connector 3. Furthermore, for example, the front side of the connection arm 4 has an opening A4 formed, for example, by two semicircular jaws G4, M4 which allow the connection arm 4 to be fixed to said flange FM. For example, one jaw G4 is fixed, being formed by a concavity of the connection arm 4, and the other jaw M4 is constrained to the fixed jaw G4 by means of bolts B4 passing through the thickness of the same jaws G4, M4.

The assembly of the device described above is carried out as follows.

The operator connects the connector 3 to the interface element 5 by inserting the conical appendage K3 of the connector 3 into the bushing 5B of the interface element 5 and screwing in the pin 5P. Subsequently, the connector arm 4 is placed with the first half-jaw G4 on the flange FM, after which the second half-jaw M4 is invested on the same collar from the opposite side and is tightened using the bolts B4. In this way, connector 3 is firmly clamped to stand 2 and feeder 1 is firmly clamped to connector 3.

The feeder 1 can be oriented, relative to stand 2, according to a number of stable working positions. These positions are in a number corresponding to the number of holes 32 provided on the base element 30 of the connector 3.

In order to change the orientation of the feeder 1, the operator, by means of the lever 38, unscrews the pin 37 and, pulling the knob P3 so as to overcome the resistance offered by the spring M3, extracts the rod R3 from the hole 32 in which the same rod R3 is located. At this point, the base member 30 is free to rotate about the axis A3 of the conical connection 31/35 and the operator, after releasing the knob P3, can rotate the dragging member around the axis A3, orienting it as desired until determining the insertion of the lower end of the rod R3 in a different hole 32 of the base member 30. Having completed this operation, the operator screws the pin 37 again using the lever 38. It should be noted that the pin 37 constitutes an optional element of the above-described system to provide additional security with respect to the possibility of the base 30 of the connector 3 disengaging from the upper element 34. In principle, however, the pin 37 may not be used since the base 30 and the upper element of the connector 3 are connected to each other via the conical connection 31/35.

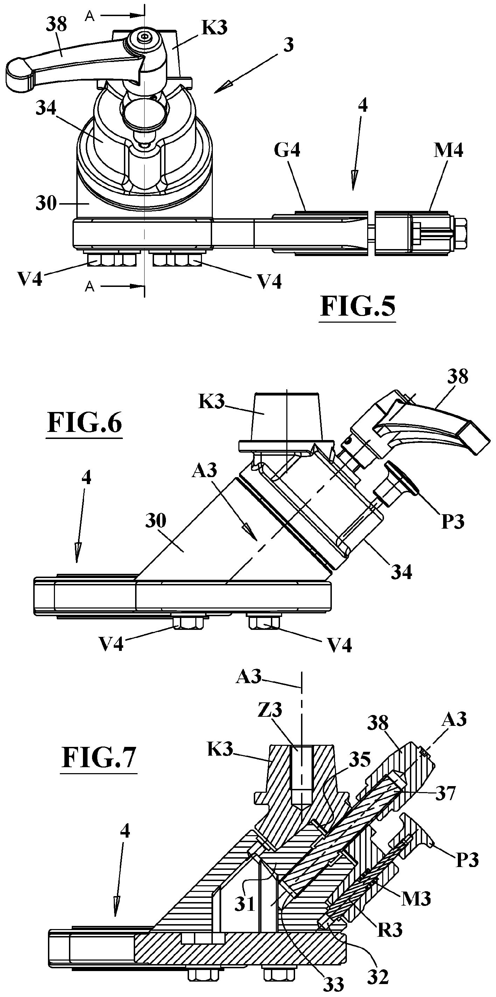

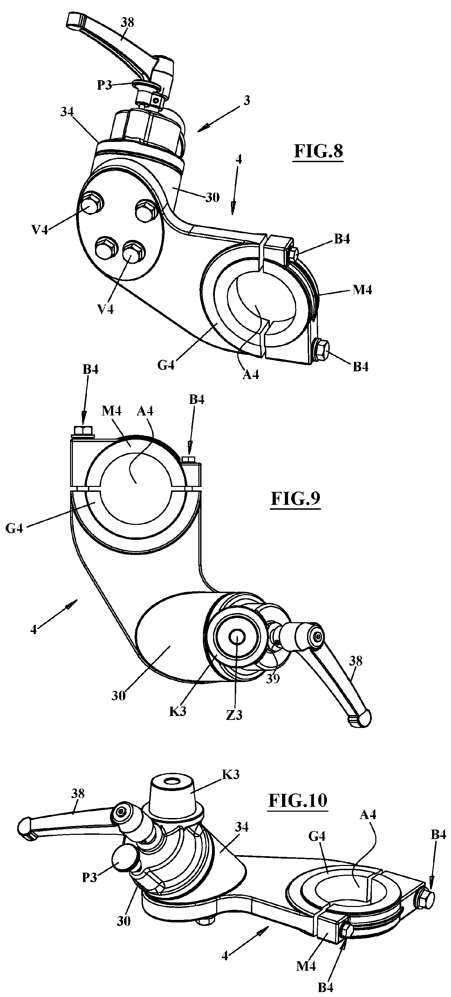

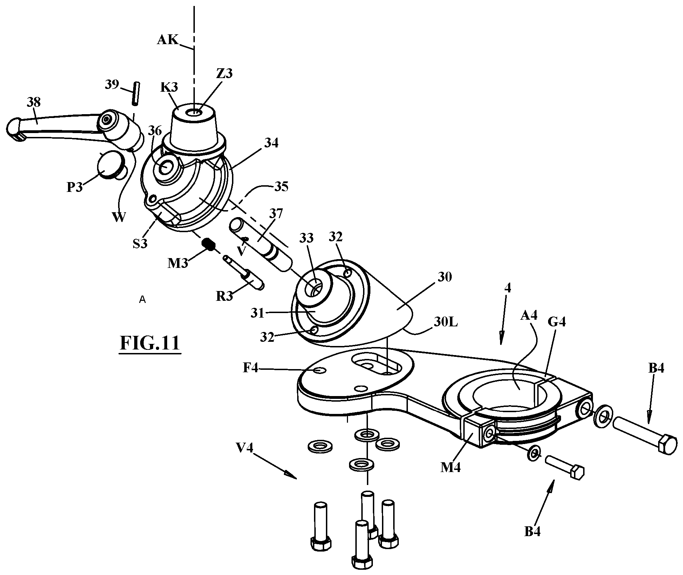

Arm 4 can be arranged to be mounted to the left of connector 3, as depicted in Figs.5-12, or to the right of the connector, as depicted in Fig.14. In fact, some users prefer to have stand 2 to the right of the centre of the ML machine, while other users prefer to have it on the left. Therefore, depending on the right or left configuration chosen by the user, there will be a different position of the feeder 1 in relation to the horizontal arm 2B of the stand and the interface 5. These two mounting modes are possible without the use of additional components or special equipment, simply by positioning arm 4 to the right or left of connector 3 before attaching arm 4 to connector 4 with screws V4.

The arm 4 can advantageously be fitted with a handle H4, as shown for example in Fig.15, to facilitate the grip of arm 4 by the user, who will thus be able to more easily control the movement of feeder 1. For example, handle H4 can be fixed on the side of arm 4 opposite to that of connection with connector 3. In the example of Fig.15, the handle H4 consists of a rod arranged centrally between the bolts B4 and orientated radially with respect to the jaw M4 to which it is connected.

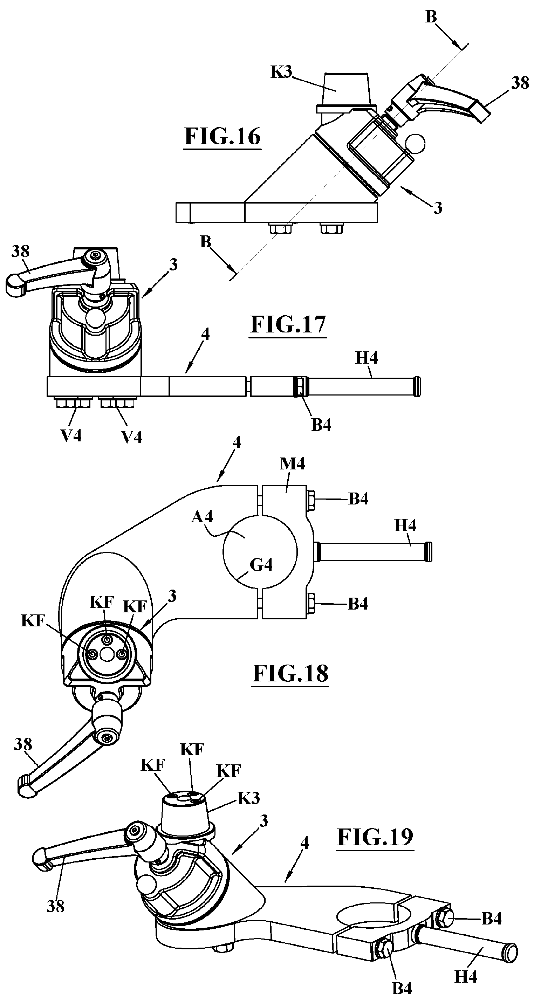

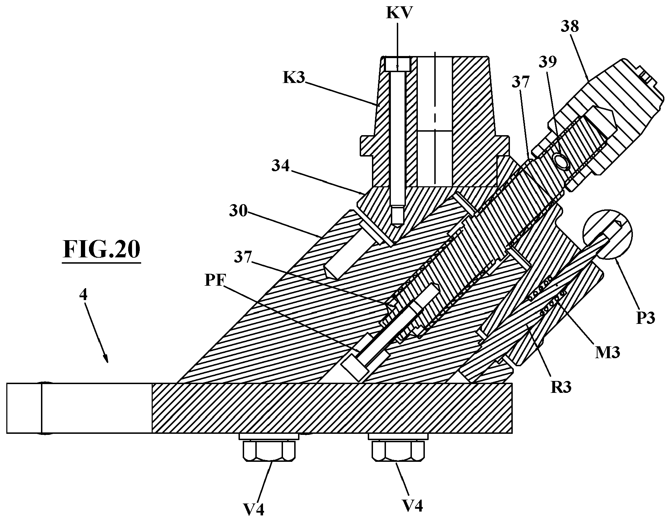

Figs. 16-22 illustrate further ways of realising a device in accordance with the present invention, in which the same numerical references adopted to distinguish components illustrated and described with reference to Figs. 1-15 are used.

For example, in order to allow an even more stable connection to be made between the base 30 and the upper body 34 of the connector 3, a threaded pin PF arranged passing from below through a special hole F1/F2 formed in the lower part of the base 30 and intended to axially engage, with its thread, a corresponding thread formed in the lower end of the pin 37 on whose upper end the lever 38 is mounted can be used. The hole F1/F2 formed in the lower part of the base 30 comprises a first section F1 of a diameter suitable to receive the head TF of the pin PF and a second section F2 of a smaller diameter to receive the shank of the same pin PF. The head TF of the pin PF faces the arm 4 and forms a stop surface which limits the reciprocal axial sliding of the base 30 and of the upper body 34 of the connector 3. In other words, the pin PF is a lower appendage of the pin 37 capable of interacting with a part of the base 30 acting as a mechanical end stop. In this way, a safety mechanism is realised which reduces the risk of accidental detachment of the base 30 from the upper body 34 of the connector 3 since these elements are always constrained in such a way that their mutual distancing is limited to a predetermined value.

Again, for example, the conical appendix K3 may comprise an element mounted on the upper body 34 of the connector 3 by means of several screws KV passing through corresponding holes KF formed in the upper side of the same conical appendix and intended to engage, on their lower side, the upper body 34 of the connector 3.

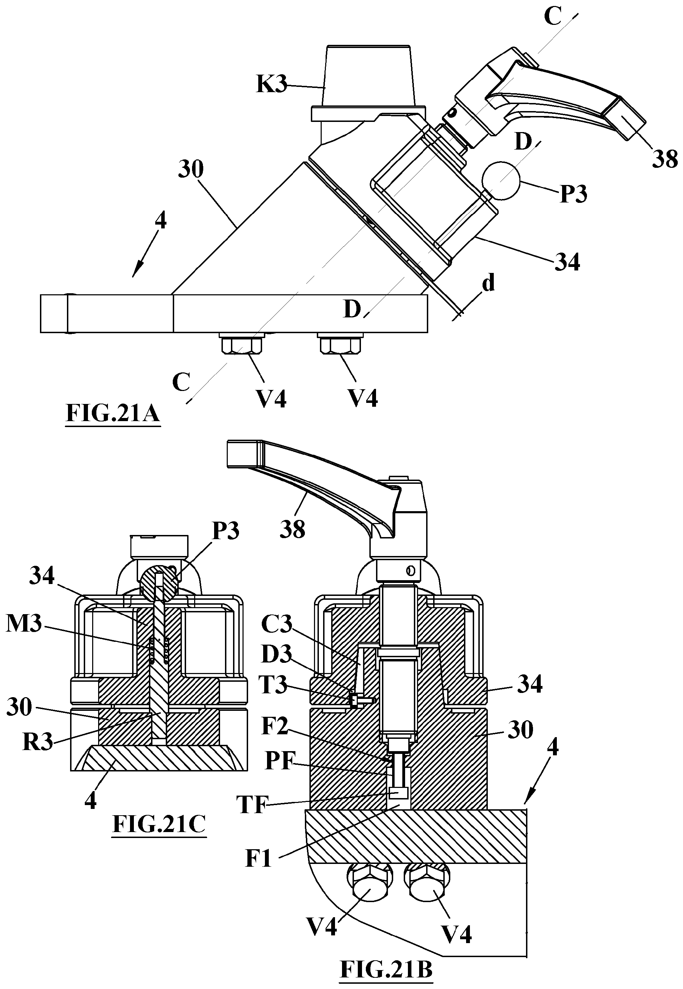

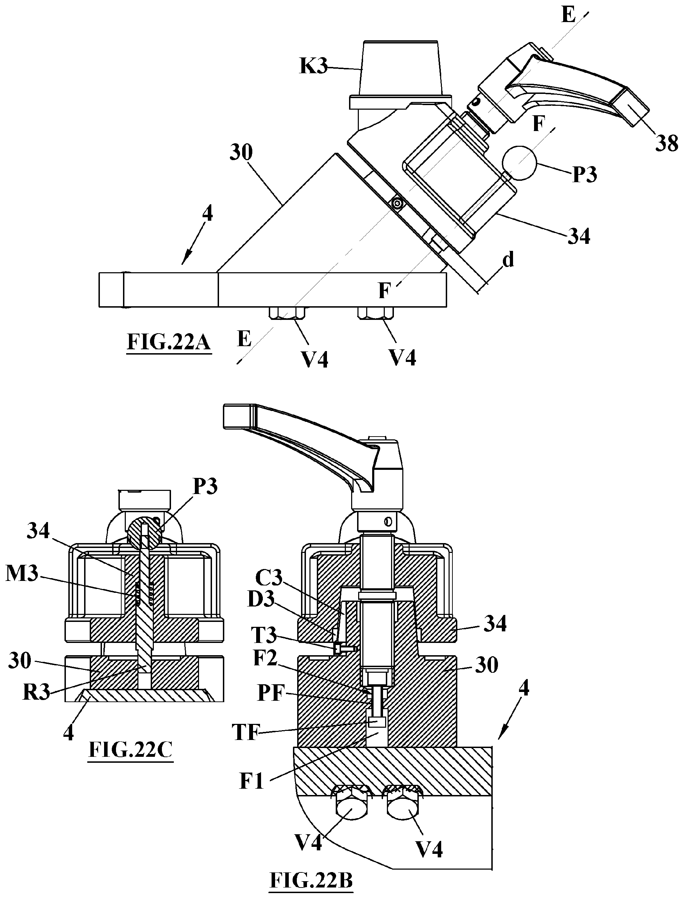

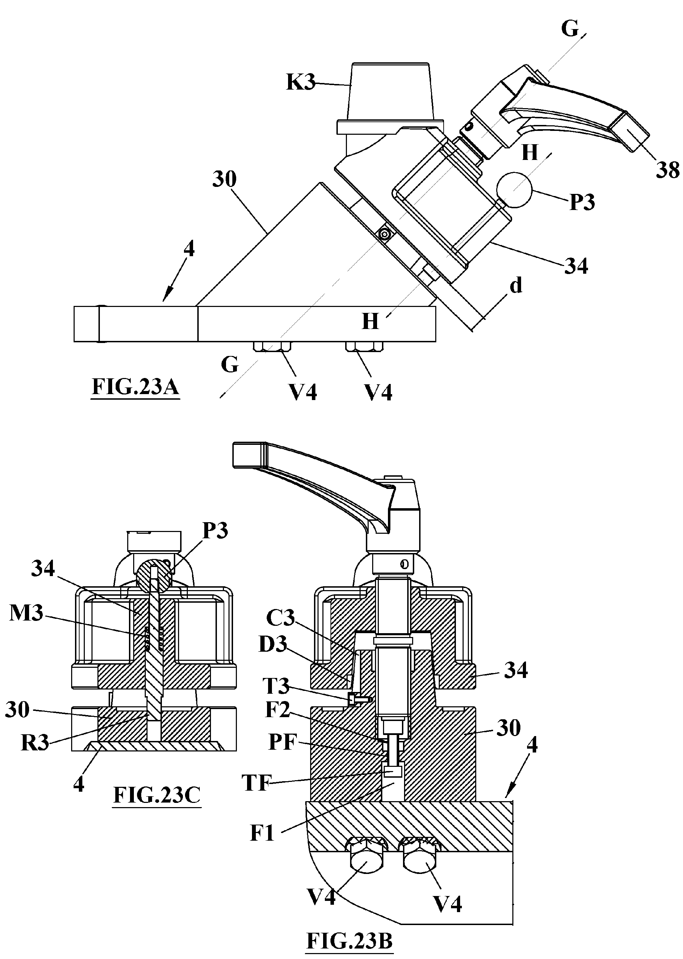

Furthermore, for example, an anti-rotation tab T3 can be positioned between the conical body 31 of the base 30 and the seat 35 of the upper element 34 of the connector 3, which has the function of limiting the spontaneous rotation of the feeder 1 around the axis A3 of the conical connection 31/35 due to the weight of the feeder itself, following the unlocking of the conical connection 31/35 with the lever 38. The anti-rotation tab T3 can be mounted in a groove C3 formed on the lateral surface of the conical body 31 and fixed by means of a respective screw J3. The seat 35 in which the conical body 31 is housed has several grooves D3, for example two grooves D3 in diametrically opposed positions, on its internal wall, the extension of which is less than that of the wall itself. Normally, with the feeder 1 oriented in a given working position, the conical body 31 is fully inserted into the seat 35, the rod R3 is inserted into one of the holes 32 of the base 30, and the anti-rotation tab T3 is located between the groove C3 and one of the grooves D3. When the orientation of the feeder 1 needs to be changed, the operator, by rotating the lever 38, and with it the pin 37, determines the spacing of the base 30 from the upper element 34 of the connector 3. Given the presence of the anti-rotation tab T3, the base 30 cannot rotate around the axis A3, i.e. the feeder 1 cannot be rotated around the axis A3, as long as the anti-rotation tab T3 engages the groove D3. Therefore, the operator must continue to rotate the lever 38 to distance the base 30 from the upper element 34 of the connector 3 until the anti-rotation tab T3 is released from the groove D3 (in fact, the height of the tab T3 is less than the length of the grooves D3). Figs. 21A-21C represent a position of approach of the base 30 and the upper body 34 in which the tab T3 prevents their mutual rotation. Figs. 22A-22C represent a position in which the base 30 and the upper body 34 are spaced apart and the tab T3 is in the process of incipient release of the groove D3. Figs. 23A-23C represent a position of distancing of the base 30 and the upper body 34 in which the tab T3 does not prevent their mutual rotation; in Figs. 21A, 21B and 21C the reference "d" highlights the progressively increasing mutual distancing of the base 30 and the upper body 34. Once the release position of the groove D3 by the tab T3 has been reached, by lifting the rod R3 using the knob P3, so as to release the rod R3 from the hole 32 in which it is inserted, the operator can unlock the rotation of the base 30 with respect to the upper element 34 and orient the feeder 1 according to another orientation. In the new desired orientation for the feeder 1, the rod R3, pushed by the spring M3, spontaneously inserts itself into another hole 32 of the base 30. At this point, the operator, acting on the lever 38 with a movement in the opposite direction to the previous one, brings the base 30 and the upper element 34 of the connector 3 closer together again, blocking the conical connection 31/35 again. At this stage, the anti-rotation tab T3 engages a groove D3 of the upper element 34 different from the one previously engaged and also acts as a guide between the base 30 and the upper element 34 as they are brought closer together. From the preceding description it is clear that a device for assembling feeders for woodworking machines in accordance with the present invention is a device comprising a connector 3 configured to be constrained to a stand 2 which in turn is configured to support a roller or tracked feeder 1 in a plurality of different operating positions, wherein the connector 3 is also configured to be connected to said feeder 1 resulting interposed between the stand 2 and the feeder 1, wherein the connector 3 comprises a first and a second component 30, 34 mutually connected so as to be able to rotate with respect to each other around a rotation axis A3 and mutually lockable according to a plurality of predefined angular positions, wherein the first component 30 of the connector 3 is configured to be connected to the feeder 1 and the second component 34 is configured to be connected to a body 5 interfacing with the stand 2, and wherein the first component 30 has an arm 4 of predetermined length and provided with two jaws G4, M4 suitable for clamping the feeder 1 at a predetermined point of the latter so that the feeder 1 is blocked to the first component 30 of the connector 3 by means of said arm 4.

From the preceding description it is also evident that a device in accordance with the present invention can advantageously present the following additional characteristics, even combined with each other:
- said jaws G4, M4 are semi-circular jaws that delimit a corresponding circular opening A4 of the arm 4;
- said jaws G4, M4 are interlocked by means of respective screw means B4 passing through the thickness of the same jaws G4, M4;
- the arm 4 is joined to the first component 30 of the connector 3 by means of respective screw means V4;
- the first component 30 and the second component 34 of the connector 3 are mutually connected by means of a conical connection formed by parts 31, 35 of the same first and second components 30, 34;
- said plurality of angular positions is defined by a plurality of holes 32 formed in the first component 30, in which a rod R3 is selectively inserted, elastically constrained to the second component 34;
- the second component 34 has a conical appendix K3 intended to couple with a corresponding conical cavity presented by a bushing 5B of the body 5 interfacing with the stand 2;
- the arm 4 can be positioned both to the right and to the left of the connector 3;
- the arm 4 is provided with a handle H4 which is preferably associated with one of the said jaws;
- between the first and the second component 30, 34 there is a device for locking and respectively unlocking the rotation around the said axis A3;
- between the first and the second component 30, 34 there is a device that limits their mutual spacing to a pre-established value.

The present invention also concerns a roller or tracked feeder 1 provided with the assembly device described above.

In practice, the execution details may however vary in an equivalent manner with regard to the individual elements described and illustrated, without departing from the idea of the solution adopted and therefore remaining within the limits of the protection granted by the present patent in accordance with the claims that follow.

## Claims

1. Device for mounting feeders of woodworking machines comprising a connector (3) configured to be secured to a stand (2) which in turn is configured to support a roller or tracked feeder (1) in a plurality of different operating positions, wherein the connector (3) is also configured to be connected to said feeder (1) between the stand (2) and the feeder (1), wherein the connector (3) comprises a first and a second component (30, 34) mutually connected so as to be able to rotate with respect to each other around a rotation axis (A3) and mutually lockable according to a plurality of predefined angular positions, wherein the first component (30) of the connector (3) is configured to be connected to the feeder (1) and the second component (34) is configured to be connected to a body (5) of interface with the stand (2), and wherein the first component ( 30) features an arm (4) having a pre-established length and provided with two jaws (G4, M4) adapted to grip the feeder (1) at a pre-established point of the latter such that the feeder (1) is locked to the first component (30 ) of the connector (3) by means of said arm (4).

2. Device according to claim 1 wherein said jaws (G4, M4) are semi-circular jaws delimiting a corresponding circular opening (A4) of the arm (4).

3. Device according to claim 1 wherein the said jaws (G4, M4) are interlocked by means of respective screw means (B4) passing through the thickness of the same jaws (G4, M4).

4. Device according to claim 1 wherein the arm (4) is joined to the first component (30) of the connector (3) by means of respective screw means (V4).

5. Device according to claim 1 wherein the first component (30) and the second component (34) of the connector (3) are mutually connected by a conical connection formed by parts (31, 35) of the same first and second components (30, 34).

6. Device according to claim 1 wherein said plurality of angular positions is defined by a plurality of holes (32) formed in the first component (30), into which a rod (R3) elastically constrained to the second component is selectively inserted (34).

7. Device according to claim 1 wherein the second component (34) has a conical appendix (K3) intended to couple with a corresponding conical cavity exhibited by a bushing (5B) of the body (5) of interface with the stand (2).

8. Device according to claim 1 wherein the arm 4 can be positioned both to the right and to the left of the connector (3).

9. Device according to claim 1 wherein the arm (4) is provided with a handle (H4) which is preferably associated with one of said jaws.

10. Device according to claim 1 wherein between the first and second components (30, 34) a device for locking and respectively unlocking the rotation around said axis (A3) is provided.

11. Device according to claim 1 wherein a device is provided between the first and second components (30, 34) which limits their mutual spacing to a pre-established value.

12. Roller or tracked feeder (1) equipped with the mounting device according to one or more of the previous claims.

## Patentansprüche

1. Vorrichtung zur Montage von Vorschubgeräten für Holzbearbeitungsmaschinen, die einen Verbinder (3) umfasst, der dazu konfiguriert ist, an einem Ständer (2) gesichert zu sein, der wiederum dazu konfiguriert ist, ein Rollen- oder Raupenvorschubgerät (1) in einer Vielzahl von unterschiedlichen Betriebspositionen zu stützen, wobei der Verbinder (3) auch dazu konfiguriert ist, mit dem Vorschubgerät (1) zwischen dem Ständer (2) und dem Vorschubgerät (1) verbunden zu sein, wobei der Verbinder (3) eine erste und eine zweite Komponente (30, 34) umfasst, die miteinander verbunden sind, um in der Lage zu sein, sich in Bezug zueinander um eine Drehachse (A3) zu drehen, und gemäß einer Vielzahl von vorab definierten Winkelpositionen gegenseitig verriegelbar sind, wobei die erste Komponente (30) des Verbinders (3) dazu konfiguriert ist, mit dem Vorschubgerät (1) verbunden zu sein, und die zweite Komponente (34) dazu konfiguriert ist, mit einem Körper (5) einer Schnittstelle mit dem Ständer (2) verbunden zu sein, und wobei die erste Komponente (30) über einen Arm (4) mit einer vorab festgelegten Länge verfügt und mit zwei Backen (G4, M4) bereitgestellt ist, die dazu ausgelegt sind, das Vorschubgerät (1) an einem vorab festgelegten Punkt des letzteren zu greifen, sodass das Vorschubgerät (1) an der ersten Komponente (30) des Verbinders (3) mittels des Arms (4) verriegelt ist.

2. Vorrichtung nach Anspruch 1, wobei die Backen (G4, M4) halbkreisförmige Backen sind, die eine entsprechende kreisförmige Öffnung (A4) des Arms (4) begrenzen.

3. Vorrichtung nach Anspruch 1, wobei die Backen (G4, M4) mittels jeweiliger Schraubmittel (B4), die durch die Dicke derselben Backen (G4, M4) verlaufen, miteinander verriegelt sind.

4. Vorrichtung nach Anspruch 1, wobei der Arm (4) mit der ersten Komponente (30) des Verbinders (3) mittels jeweiliger Schraubmittel (V4) verknüpft ist.

5. Vorrichtung nach Anspruch 1, wobei die erste Komponente (30) und die zweite Komponente (34) des Verbinders (3) durch eine konische Verbindung, die durch Teile (31, 35) derselben ersten und zweiten Komponente (30, 34) gebildet ist, miteinander verbunden sind.

6. Vorrichtung nach Anspruch 1, wobei die Vielzahl von Winkelpositionen durch eine Vielzahl von Löchern (32) definiert ist, die in der ersten Komponente (30) gebildet ist, in die eine Stange (R3), die elastisch an der zweiten Komponente festgehalten wird, selektiv eingeführt wird (34).

7. Vorrichtung nach Anspruch 1, wobei die zweite Komponente (34) einen konischen Ansatz (K3) aufweist, der dazu gedacht ist, mit einem entsprechenden konischen Hohlraum zu koppeln, der durch eine Buchse (5B) des Körpers (5) der Schnittstelle mit dem Ständer (2) gezeigt ist.

8. Vorrichtung nach Anspruch 1, wobei der Arm 4 sowohl rechts als auch links von dem Verbinder (3) positioniert sein kann.

9. Vorrichtung nach Anspruch 1, wobei der Arm (4) mit einem Griff (H4) bereitgestellt ist, der bevorzugt mit einer der Backen assoziiert ist.

10. Vorrichtung nach Anspruch 1, wobei zwischen der ersten und der zweiten Komponente (30, 34) eine Vorrichtung zum Verriegeln und jeweils Entriegeln der Drehung um die Achse (A3) bereitgestellt ist.

11. Vorrichtung nach Anspruch 1, wobei eine Vorrichtung zwischen der ersten und der zweiten Komponente (30, 34) bereitgestellt ist, die deren gegenseitigen Abstand auf einen vorab festgelegten Wert eingrenzt.

12. Rollen- oder Raupenvorschubgerät (1), das mit der Montagevorrichtung nach einem oder mehreren der vorhergehenden Ansprüche ausgestattet ist.

## Revendications

1. Dispositif de montage d'alimenteurs de machines à bois comprenant un raccord (3) conçu pour être fixé à un support (2) qui est à son tour conçu pour supporter un alimenteur à rouleaux ou à chenilles (1) dans une pluralité de positions de fonctionnement différentes, dans lequel le raccord (3) est également conçu pour être raccordé audit alimenteur (1) entre le support (2) et l'alimenteur (1), dans lequel le raccord (3) comprend un premier et un second composant (30, 34) mutuellement raccordés de façon à pouvoir tourner l'un par rapport à l'autre autour d'un axe de rotation (A3) et mutuellement verrouillables selon une pluralité de positions angulaires prédéfinies, dans lequel le premier composant (30) du raccord (3) est conçu pour être raccordé à l'alimenteur (1) et le second composant (34) est conçu pour être raccordé à un corps (5) d'interface avec le support (2), et dans lequel le premier composant (30) comporte un bras (4) présentant une longueur préétablie et muni de deux mâchoires (G4, M4) adaptées pour saisir l'alimenteur (1) au niveau d'un point préétabli de ce dernier de sorte que l'alimenteur (1) soit verrouillé au premier composant (30) du raccord (3) au moyen dudit bras (4).

2. Dispositif selon la revendication 1, dans lequel lesdites mâchoires (G4, M4) sont des mâchoires semi-circulaires délimitant une ouverture circulaire correspondante (A4) du bras (4).

3. Dispositif selon la revendication 1, dans lequel lesdites mâchoires (G4, M4) sont interverrouillées au moyen de moyens de vis respectifs (B4) traversant l'épaisseur des mêmes mâchoires (G4, M4).

4. Dispositif selon la revendication 1, dans lequel le bras (4) est relié au premier composant (30) du raccord (3) au moyen de moyens de vis respectifs (V4).

5. Dispositif selon la revendication 1, dans lequel le premier composant (30) et le second composant (34) du raccord (3) sont mutuellement raccordés par un raccord conique formé par des pièces (31, 35) des mêmes premier et second composants (30, 34).

6. Dispositif selon la revendication 1, dans lequel ladite pluralité de positions angulaires est définie par une pluralité de trous (32) formés dans le premier composant (30), dans lesquels une tige (R3) contrainte élastiquement au second composant est insérée sélectivement (34).

7. Dispositif selon la revendication 1, dans lequel le second composant (34) présente un appendice conique (K3) destiné à s'accoupler avec une cavité conique correspondante montrée par une douille (5B) du corps (5) d'interface avec le support (2).

8. Dispositif selon la revendication 1, dans lequel le bras 4 peut être positionné aussi bien à droite qu'à gauche du raccord (3).

9. Dispositif selon la revendication 1, dans lequel le bras (4) est muni d'une poignée (H4) qui est de préférence associée à l'une desdites mâchoires.

10. Dispositif selon la revendication 1, dans lequel entre les premier et second composants (30, 34) est ménagé un dispositif pour verrouiller et respectivement déverrouiller la rotation autour dudit axe (A3).

11. Dispositif selon la revendication 1, dans lequel est ménagé un dispositif entre les premier et second composants (30, 34) qui limite leur espacement mutuel à une valeur préétablie.

12. Alimenteur à rouleaux ou à chenilles (1) équipé du dispositif de montage selon une ou plusieurs des revendications précédentes.
